# EUROPEAN PATENT APPLICATION

(11) **EP 1 574 936 A1**
(43) Date of publication of application: **14.09.2005**
(21) Application number: 04380053.1
(22) Date of filing: 08.03.2004
(51) Int. Cl.: G06F 3/033, G07F 17/34

(54) **Image processing device**

(71) Applicant: Giga Games System, SL, 08190 Sant Cugat del Vallès (Barcelona) (ES)
(72) Inventor: Lao Hernandez, Juan, 08190 Sant Cugat del Vallès Barcelona (ES)
(74) Representative: Manresa Val, Manuel

(57) **Abstract**

The image processing means rotate at least one of the existing images (5,6,7) on the surface of the image of the support, in respect to a first/second imaginary axis (8,9,10) and to a previous order given by the user or the CPU, being said first/second imaginary axis independent in respect to the second/first imaginary axis. The image (5,6,7) that rotates on the basis of the second imaginary axis (8,9,10) stops on the basis of an order given by the user or to an order of the CPU. It means that when the image appears, either because it offers a prize, as for example for an amusement machine, or because it offers a certain type of information, for example relative to a certain place in particular the user selects that image, and can rotate it independently of all those images that can appear in the rest of the screen. Also it is possible that the CPU is the one that sends the order to rotate the image.
In addition this apparatus allows to rotate the image perpendicularly or parallelly to the referred axis of the support, or even inclined, in this way it is facilitated that the user has the feeling to enter by himself in sub-screens, and his interest in the apparatus and the images that shows stays alive.

## Description

Image processing device, that comprises a keyboard, means for feeding the apparatus, a CPU, a frame or furniture, image processing means and a screen where it is shown, on an image of at least a support, series of images, correlatives, said processing means individualizing each one of the mentioned images in the surface of the referred image of the support, that is at least one, and rotating said image of the support around a first imaginary axis, stopping the image of the support either to an order of the user, or to an order of the CPU and that is characterized in that the image processing means rotate at least one of the existing images on the surface of the image of the support, in respect to a second imaginary axis and to a previous order given by the user or the CPU, being said second imaginary axis independent in respect to the first imaginary axis, and in that in addition the image that rotates on the basis of the second imaginary axis stops on the basis of an order given by the user or to an order of the CPU.

### BACKGROUNDS OF THE INVENTION

It is known in the state of the art different apparatuses for processing images that show or simulate images in a screen.

It is known the European Patent n° 0864117, of 1997, in the name of APPLIED GRAPHICS TECHNOLOGIES, INC., that refers to an apparatus and method for processing images such as photographs or magazine pages. The computer-driven apparatus includes a reciprocating easel which moves along railings under an image capture device such as a camera. Vacuum pickers pick up images, which have been processed and drop them into image drop bins under computer control, thus freeing the human operator from moving images. Vacuum compartments on the reciprocating easel hold images securely in place while they are photographed but release them when they are not being photographed. A bar code scanner system may be used to track images and correlate the images with film frames in the camera. Translucent panels within the easel allow transparencies to be processed by illuminating the images from beneath the easel.

Also it is in the state of the art the European Patent n° 0842495, granted, in the name of UNITED PARCEL SERVICE OF AMERICA, INC., of 1996, that consists of a method and system including a high speed computer algorithm for rotating images stored in a computer memory, such as those captured by a CCD array. The method and system may be used with an over-the-belt optical character recognition (OCR) reader that captures a pixelized image of the surface of a parcel as it moves along a conveyor. A run-length encoded output image is obtained from a run-length encoded input image, wherein the output image is a rotated version of the input image. A predefined pixel mapping sequence for a rotation angle with a rational tangent is used to map image pixel data. Mapping image pixel data using a predefined pixel mapping sequence allows rotation without floating point computations, and allows the use of a reverse pixel mapping technique to map output runs from an input image in order to avoid the creation of holes or artifacts in the output image. Mapped output runs are scaled to preserve the aspect ratio of the rotated image. The order of processing the elements of the input run-length input table is selected so as to directly create a run-length encoded output table.

European Patent n° 0804779, of 1996 also, in the name the firm SARNOFF CORPORATION that Method and apparatus for processing a sequence of images to detect object movement within the sequence. Specifically, the method comprises the steps of: (a) supplying a sequence of image frames; (b) initializing a reference image that contains image information regarding stationary objects within a scene represented by the sequence of images; (c) supplying a next image frame which temporally follows the sequence of image frames; (d) comparing the next image to the reference image to produce a motion image representing motion information regarding movement of objects within the scene; (e) updating the reference image with information within the next image that represents stationary objects within the scene; and (f) repeating steps (c), (d), and (e) for each next image supplied. The method is implemented by image processing apparatus. A specific embodiment of the method and apparatus is a traffic monitoring system that identifies vehicles in varying illumination levels and eliminates erroneous identification of non-physical movement in the scene such as shadows and headlight reflections.

### BRIEF DESCRIPTION OF THE INVENTION

The present invention is a considerable advance in the sector of the image since the present apparatus can be applied to different technical fields, for example to the education, to the leisure, diverse sectors like tourism, banking, etc., due to its versatility and easy adaptability to different sectors.

Thus in this application, the inventor has developed a new image processing device that very easily allows user to reach at lower screens or sub-screens, allowing that the user can remember in his mind the screen in which he is, since in each sub-screen the image can turn in a different way to the previous screen, giving a sensation to go from a general screen to sub-screens.

In this way, the object of the present application is an image processing device, that comprises a keyboard, means for feeding the apparatus, a CPU, a frame or furniture, image processing means and a screen where it is shown, on an image of at least a support, series of images, correlative, said processing means individualizing, each one of the mentioned images in the surface of the referred image of the support, that is at least one, and rotating said image of the support around a first imaginary axis, stopping the image of the support either to an order of the user, or to an order of the CPU and that is characterized in that the image processing means rotate at least one of the existing images on the surface of the image of the support, in respect to a second imaginary axis and to a previous order given by the user or the CPU, being said second imaginary axis independent in respect to the first imaginary axis, and in that in addition the image that rotates on the basis of the second imaginary axis stops on the basis of an order given by the user or to an order of the CPU.

It means that when the image appears, either because it offers a prize, as for example for a amusement machine, or because it offers a certain type of information, for example relative to a certain place in particular, the user selects that image, and can rotate it independently of all those images that can appear in the rest of the screen. Also it is possible that the CPU is the one that sends the order to rotate the image.

In addition this apparatus allows to rotate the image perpendicularly or parallelly to the referred axis of the support, or even inclined, in this way it is facilitated that the user has the feeling to enter by himself in sub-screens, and his interest in the apparatus and the images that shows stays alive.

To all the advantages previously mentioned in respect to the device, is added, in addition, its simplicity for using it, in such a way that the user can neither have knowledge about computers or that the mouse can not be an obstacle for its use.

### BRIEF DESCRIPTION OF THE DRAWINGS

With the purpose to facilitate the explanation a sheet of drawings is attached to the present description, in which a practical case of an embodiment has been reproduced, which is mentioned only for exemplificative, non limitative of the scope of the present invention:

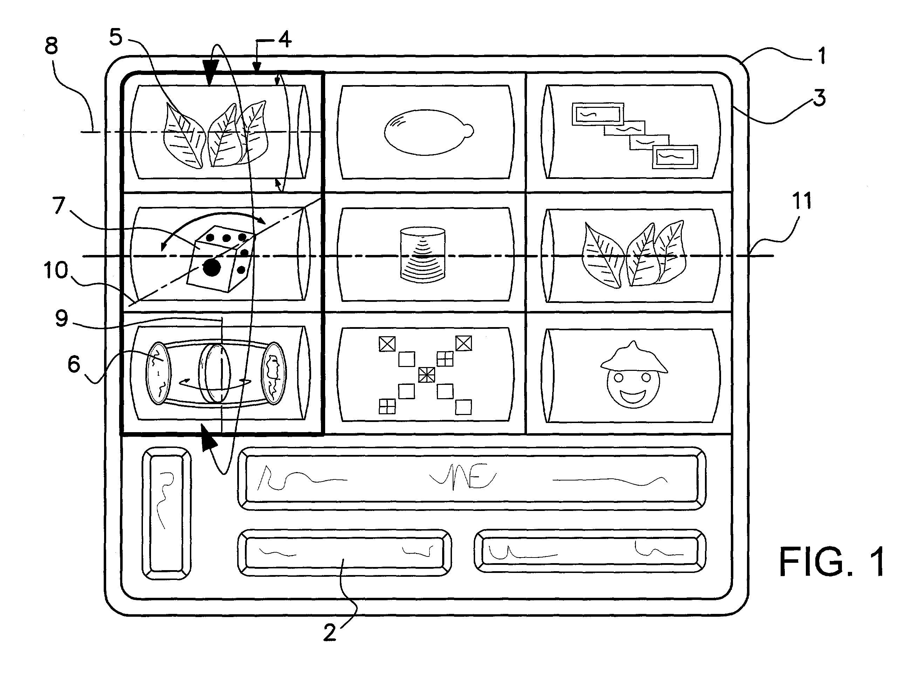

- Figure 1 is a view of a panel with four of the possibilities of rotation of the images.

### PREFERRED EMBODIMENT OF THE PATENT APPLICATION

Thus in figure 1 it is shown a keyboard 1, a frame or furniture 2, a screen 3, a support 4, images 5,6,7, a first imaginary axis 11, a parallel imaginary axis 8, a perpendicular imaginary axis 9 and an inclined imaginary axis 10, these three in respect to the first imaginary axis 11.

The present embodiment will be concreted in an amusement machine, but as it has been indicated previously, this invention could be used in an informative panel for tourism, a banking terminal, the sector of the education, etc.

Said image processing device, in its embodiment of amusement machine, comprises a keyboard 1, that can be by means of push buttons, or by a tactile screen, means for feeding the apparatus (not illustrated in the drawings), a CPU (not illustrated in the drawings), a frame or furniture 2, image processing means (not illustrated in the drawings).

Also it comprises a screen 3 where it is shown, on an image of a support 4 (in this embodiment there are three supports or rollers), series of images 5,6,7, correlative, said processing means individualizing each one of the mentioned images 5,6,7 in the surface of each image of the roller 4.

The images of the roller 4 rotate and stop around a first imaginary axis 11, either to an order of the user, or to an order of the CPU.

User has the option to rotate the images in respect to a second imaginary axis, which can be parallel 8, perpendicular 9 or inclined 10 to the first imaginary axis.

In this way, to a previous order given by the user or the CPU, for example touching the tactile screen or by means of a keyboard, over one of the existing images 5,6,7 on the surface of the image of the roller 4, said second imaginary axis, independent in respect to the first imaginary axis, rotates in base of the second imaginary axis 8,9,10 and stops in base of an order given by the user or CPU.

The rotation can be by means of second imaginary axis 8 parallel to the first imaginary axis 11, or by means of a second imaginary axis 9 perpendicular to the first imaginary axis or also by means of the second imaginary axis 10 inclined in respect to the first imaginary axis.

It means that a second image is formed, that can be the same or different from the previous one, granting a prize if it is the case.

There is the possibility that, depending on the image, can be combined different options with third imaginary or subsequent axis, that is to say, in a play it can appear the possibility to rotate parallelly (parallel axis 8). When the image stops gives the possibility of choosing by means of keys the possibility of rotating perpendicularly, (perpendicular axis 9), giving the possibility that it is on the left or on the right. Finally, when the last image is stopped, it gives the possibility of turning inclined (inclined axis 10).

It is necessary to remark the versatility of this apparatus, that allows to extend it to other fields, related not only to the amusement machines as it has been explained previously.

The present application describes a new image processing device. The examples mentioned here are not limitatives of the present invention, for that reason it will be able to have different applications and/or be adapted, all of them within the scope of the following claims.

## Claims

1. Image processing device, that comprises a keyboard (1), means for feeding the apparatus, a CPU, a frame or furniture (2), image processing means and a screen (3) where it is shown, on an image of at least a support (4), series of images (5,6,7), correlative, said processing means individualizing each one of the mentioned images (5,6,7) in the surface of the referred image of the support (4), that is at least one, and rotating said image of the support (4) around a first imaginary axis (11), stopping the image of the support either to an order of the user, or to an order of the CPU and that is **characterized in that** the image processing means rotate at least one of the existing images (5,6,7) on the surface of the image of the support, in respect to a second imaginary axis (8,9,10) and to a previous order given by the user or the CPU, being said second imaginary axis independent in respect to the first imaginary axis, and **in that** in addition the image (5,6,7) that rotates on the basis of the second imaginary axis (8,9,10) stops on the basis of an order given by the user or to an order of the CPU.

2. Apparatus in accordance with claim 1 **characterized in that** the referred the second imaginary axis (8) is parallel to the first imaginary axis.

3. Apparatus in accordance with claim 1 **characterized in that** the referred the second imaginary axis (9) is perpendicular to the first imaginary axis.

4. Apparatus in accordance with claim 1 **characterized in that** the referred the second imaginary axis (10) is inclined in respect to the first imaginary axis.

5. Apparatus in accordance with claim 2 or 3 or 4 **characterized in that** it includes a third imaginary axis, parallel to referred the second imaginary axis (8,9,10), that rotates at least one image, by means of an order previously given by the user or the CPU and that stops said third imaginary axis by means of an order previously given by the user or the CPU.

6. Apparatus in accordance with claim 2 or 3 or 4 **characterized in that** it includes a third imaginary axis, perpendicular to referred the second imaginary axis (8,9,10), that rotates at least one image, by means of an order previously given by the user or the CPU and that stops said third imaginary axis by means of an order previously given by the user or the CPU.

7. Apparatus in accordance with claim 2 or 3 or 4 **characterized in that** it includes a third imaginary axis, inclined in respect to referred the second imaginary axis (8,9,10), that rotates at least one image, by means of an order previously given by the user or the CPU and that stops said third imaginary axis by means of an order previously given by the user or the CPU.

8. Apparatus in accordance to one of the claims from 1 to 8 **characterized in that** the screen (3) is tactile.
